# FASCICULE DE BREVET EUROPEEN

(11) **EP 0 748 348 B1**
(45) Date de publication et mention de la délivrance du brevet: **24.09.1997**
(21) Numéro de dépôt: 95911355.6
(22) Date de dépôt: 28.02.1995
(51) Int. Cl.: C08J 5/04, C08J 3/215, C08L 101/00

(54) **POLYMERES RENFORCES DE MICROFIBRILLES DE CELLULOSE, LATEX, POUDRES, FILMS, JONCS CORRESPONDANTS, ET LEURS APPLICATIONS**
MIT CELLULOSEMICROFIBRILLEN VERSTÄRKTE POLYMERE, DARAUS HERGESTELLTE LATEX, PULVER, BESCHICHTUNGEN, STÄBE UND IHRE VERWENDUNGEN
CELLULOSE MICROFIBRIL-REINFORCED POLYMERS, LATEX, POWDERS, FILMS, RODS MANUFACTURED THEREFROM AND USES THEREOF

(30) Priorité: 01.03.1994 FR 9402315
(43) Date de publication de la demande: 18.12.1996
(73) Titulaire: ELF ATOCHEM S.A., 92800 Puteaux (FR)
(72) Inventeur: CAVAILLE, Jean-Yves, F-38640 Claix (FR); CHANZY, Henri, F-38700 La Tronche (FR); FAVIER, Véronique, Geneviève, F-92340 Bourg-la-Reine (FR); ERNST, Benoît, F-27170 Beaumont-le-Rocher (FR)
(74) Mandataire: Haicour, Philippe
(86) Numéro de dépôt international: FR9500234
(87) Numéro de publication internationale: WO9523824

(56) Documents cités:
- WO-A-93/10172
- GB-A- 2 195 672
- COMPOSITE SYSTEMS FROM NATURAL AND SYNTHETIC POLYMERS, 1986, EDITED BY SALMéN L. ET AL, AMSTERDAM pages 65 - 74 KLASON C. ET AL 'Cellulose in Polymeric Composites'
- POLYMER COMPOSITES, vol.10, no.2, Avril 1989 pages 69 - 77 ZADORECKI P. ET AL 'Future Prospects for Wood Cellulose as Reinforcement in Organic Polymer Composites'
- PATENT ABSTRACTS OF JAPAN vol. 10, no. 123 (C-344) 8 Mai 1986 & JP,A,60 250 079 (DAICEL KAGAKU KOGYO KK.) 10 Décembre 1985

## Description

### DOMAINE TECHNIQUE

La présente invention a trait à des matrices polymères renforcées de fibres cellulosiques, à leur élaboration sous forme de suspensions aqueuses, et à certaines de leurs utilisations.

### ART ANTERIEUR

L'industrie fait largement appel à des matériaux composites constitués d'une matrice polymère dont les propriétés, en particulier les propriétés mécaniques doivent être adaptées par incorporation de charges ou de renforts. Certains de ces matériaux composites sont élaborés à partir de latex copolymères et de fibres. C'est de ces matériaux que traite la présente invention. En matière de renfort, on a déjà reconnu l'avantage de la cellulose, en particulier des particules de cellulose microcristalline, pour le renfort de polymères à partir de leurs solutions, par exemple les solutions aqueuses de résines aminoplastes citées dans WO 93/10172, ou encore pour la réalisation de compositions pour vernis à ongles (US 4,891,213)dont on a apprécié des propriétés secondaires mais importantes comme la transparence ou le poli du composite. On a aussi envisagé la charge ou le renfort cellulosique par les méthodes ordinaires de compounding de résines thermoplastiques (voir pour exemples : Composite Systems from Natural and Synthetic Polymers, par Klason et all dans Materials Science Monographs, 36, Elsevier 1986, ou encore Future Prospects for Wood Cellulose as reinforcement in Organic Polymer Composites par Zadorecki et all dans Polymer Composites, 10/2, p. 69, 1989).

### EXPOSE DE L'INVENTION

On vient maintenant de trouver que l'on peut réaliser des composites d'une qualité tout à fait inattendue constitués d'un polymère thermoplastique et d'un renfort de microfibrilles individualisées de cellulose, avec comme moyen de réalisation, des latex incorporant lesdites microfibrilles de cellulose. Pour la commodité du langage, on décrira ces latex sous le raccourci de latex renforcés.

Au sens de la présente invention, on entend par microfibrilles individualisées de cellulose, des formes de cellulose qui se présentent en éléments plus ou moins rigides, d'une longueur moyenne supérieure au micromètre, dont le diamètre est compris approximativement entre 2 et 30 nanomètres, préférentiellement supérieur à 7 nanomètres, avec un facteur de forme, c'est-à-dire le rapport longueur/ diamètre toujours supérieur à 60, et dont le taux de cristallinité est supérieur à 20%, préférentiellement supérieur à 70%.

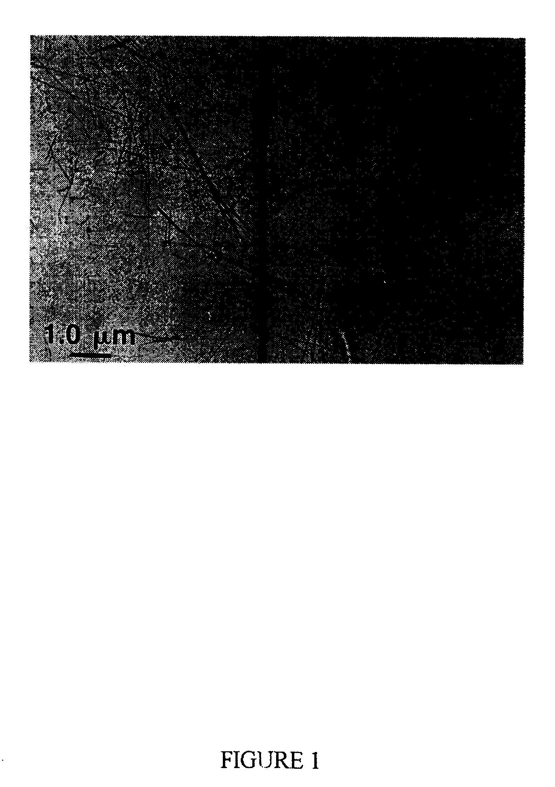

D'une façon générale, la cellulose se présente sous forme d'une hiérarchie de structures. Les molécules de cellulose sont toujours biosynthétisées sous forme de microfibrilles, qui sont à leur tour assemblées en fibres, pellicules, parois, etc. La microfibrille de cellulose peut être considérée comme un élément structural important de la cellulose naturelle. Elle est constituée par un assemblage de chaînes de cellulose dont le degré moyen de polymérisation est supérieur à 1.000 et dont le degré de perfection dans leur organisation parallèle se traduit dans son taux de cristallinité. On l'obtient à partir de la cellulose brute dont la teneur par rapport au poids sec des parois des cellules dont elle constitue l'armature va de 30% (cellulose de parenchyme) à 95% (cellulose de tunicine). Il est donc nécessaire d'appliquer à la matière première cellulosique un traitement de dilacération, blanchiment et désincrustation pour obtenir une cellulose brute, puis d'en obtenir les microfibrilles par cisaillement puissant dans un homogénéiseur. Les microfibrilles de cellulose végétale sont associées entre elles de façon parallèle dans les parois secondaires ou entrelacées de façon désordonnée dans les parois primaires. La dissociation des parois secondaires est difficile ; par contre, dans les parois primaires, elle est beaucoup plus aisée. Le parenchyme est un exemple de tissu ne comprenant que de la paroi primaire.Un modèle de traitement de la cellulose animale est donné dans Les exemples 1 et 1bis pour l'obtention de microfibrilles de tunicine. Pour l'obtention de la microcellulose de parenchyme, on peut appliquer les traitements préconisés par Weibel (US 4.831.127) pour l'obtention de la cellulose brute.
Toutes les microfibrilles ne développent pas la qualité de renfort présentement recherchée, ou du moins ne la développent pas au niveau qui a été reconnu dans l'invention. Le phénomène de renforcement provient de ce que les microfibrilles sont dispersées dans la matrice polymère, au sein de laquelle elle s'organise en une sorte de réseau dont la maille dépend de leur fraction pondérale ou volumique et de leurs caractéristiques dimensionnelles. Cette propriété est liée à des conditions de forme : leur diamètre et leur longueur que l'on apprécie plutôt dans son rapport au diamètre via un facteur de forme. Cette propriété est très fortement conditionnée par l'individualité des microfibrilles, laquelle se repère clairement sur les images microscopique (voir par exemple la figure 1) mais plus simplement par l'observation que leurs suspensions aqueuses à quelques pour-cent sont colloïdale. Cette propriété de renfort est également liée, bien qu'à un degré moindre, à leur rigidité, elle-même en relation étroite avec leur cristallinité, dont la valeur est d'autant plus élevée qu'est plus faible leur rapport surface/volume. Cette cristallinité s'estime de façon bien connue par l'examen des diagrammes de diffraction X. Le corollaire important de la dépendance de la propriété de renfort des microfibrilles est qu'elle considérablement altérée par leur agrégation. Les microfibrilles utiles pour l'invention se distinguent en cela de ce qu'on dénomme couramment celluloses microcristallines, lesquelles résultent de l'hydrolyse de la cellulose de bois ou de coton, particulièrement de son hydrolyse chlorhydrique, dont déjà le degré de polymérisation est nettement plus faible, et qui surtout ne sont pas individualisées ; lesquelles celluloses microcristallines lorsqu'elles subissent un traitement adapté pour en individualiser les éléments, ne fournissent que des microcristaux qui, si elles conservent plus ou moins Le diamètre de la cellulose de départ, sont beaucoup plus courtes, par exemple environ 100 nm pour la cellulose de bois (tel est le cas par exemple des celluloses utilisées par Boldizar et coll., "Prehydrolyzed Cellulose as Reinforcing Filler for Thermoplastics", Intern. J. Polymeric Mater., 1987, vol. 11, 229-262).

Il est souhaitable que pour une bonne réalisation de l'invention, les caractéristiques révélées plus haut des microfibrilles soient toutes exactement réalisées. Les microfibrilles utilisables pour l'invention sont d'une façon générale constituées d'une succession de monocristaux séparés par des zones de cellulose amorphe, la flexibilité qu'elles présentent provenant d'une part de la longueur des monocristaux, d'une autre de la présence des segments intermédiaires amorphes. Cette définition qu'on a donné des microfibrilles selon l'invention englobe aussi les monocristaux de cellulose très longs qui sont obtens avec un facteur de forme est supérieur à 60 par hydrolyse acide de fibres ou fibrilles de cellulose native, comme c'est le cas de la tunicine. Il existe des possibilités de compensation entre ces caractéristiques : ainsi, peuvent rester acceptables pour l'invention des microfibrilles longues qui présentent une certaine flexibilité, pour autant que cela ne nuise pas à leur individualité, ou encore des microfibrilles de faible diamètre, qui à teneur pondérale comparable à celle de microfibrilles de plus fort diamètre compensent leur manque de rigidité par une densité en nombre plus grande et la formation d'un réseau plus dense. Ce sont des choix qui appartiennent à l'homme du métier qui, dans les cas particuliers qui se présentent à lui, sait toujours balancer les avantages et les inconvénients, y compris économiques, de claque solution. Les indications qui suivent l'aideront dans ses choix.

Les sources de microfibrilles sont diverses. Le parenchyme végétal en fournit qui ont des diamètres de 2 à 3 nm; celles du bois sont d'environ 3,5 nm. Les longues microfibrilles de cellulose d'origine bactérienne ont des diamètres d'environ 5 à 7 nm. Les microfibrilles d'origine animale, et en particulier celles qu'on peut obtenir à partir de la tunicine qui constitue la majeure partie de l'enveloppe d'animaux marins appartenant à la famille des tuniciers (par exemple les espèces comestibles Halocynthia roeretzi ou Halocynthia aurantium du Japon ou Microcosmus Fulcatus de Méditerranée - les violets) ont un diamètre d'environ 10 à 20 nanomètres. D'autres, également de diamètre plus élevé, peuvent être tirées d'algues à parois cellulosiques.

Les microfibrilles de tunicine, dont une image est donnée en figure 1, répondent parfaitement à cette définition des microfibrilles selon l'invention. Elles contiennent peu de défauts et peuvent être considérées comme de véritables monocristaux auxquels on s'accorde à attribuer un module d'élasticité de l'ordre de 130 GPa, ce qui devrait donner au niveau des contraintes de rupture des valeurs de l'ordre de 13 GPa pour une microfibrille. La cellulose de parenchyme se présente sous la forme de longues microfibrilles dont les diamètres sont compris entre 2 et 3,5 nm, organisées de façon désordonnée dans les parois cellulaires de type primaire. Certaines de ces microfibrilles sont associées en faisceaux de 10 à 20 unités, d'autres sont individuelles.

Les microfibrilles de cellulose d'origine bactérienne ont un facteur de forme très levé et leur cristallinité est plus faible.

Les microfibrilles de celluloses sont exploitées selon l'invention sous la forme des dispersions aqueuses telles que les produisent les homogénéiseurs. Il peut arriver, et c'est même assez fréquent, que les suspensions qu'on obtient ainsi soient floculantes, et donc que les microfibrilles y perdent leur individualité. Il est alors nécessaire de leur appliquer un traitement de stabilisation. Ainsi, le procédé de préparation des microfibrilles tel qu'il a été décrit dans la demande internationale WO 93101712, consiste à combiner une désintégration de la cellulose, avec un passage dans un homogénéiseur puissant et un traitement acide apte à munir les microfibrilles de charges électriques de surface, sans pour autant modifier l'ordre de grandeur du degré initial de polymérisation de la cellulose, par exemple un traitement à l'acide sulfurique ou à l'acide phosphorique. On peut parfaire la dispersion des suspensions aqueuses ainsi obtenues par un passage aux ultrasons.

Les suspensions titrant jusqu'à 0,3% de microfibrilles sont translucides. Leur observation entre deux polariseurs croisés et en agitant les suspensions révèle la présence de nombreux domaines biréfringents correspondant à un ordonnancement en cristaux liquides. Ces domaines de biréfringence deviennent difficilement observables dans les suspensions à concentrations supérieures à 0,6% du fait de leur opacité. Les suspensions de microfibrilles de cellulose présentent en outre des propriétés rhéologiques remarquables. Leur viscosité est déjà très notable pour des concentrations de l'ordre de 1 à 2%, et certaines d'entre elles peuvent présenter un comportement thixotropique. De telles suspensions sont directement utilisables pour la préparation de latex dits "renforcés" dont on parle maintenant.

Au sens de la présente invention, on entend par "latex renforcés" des compositions aqueuses qui renferment en suspension à la fois un polymère thermoplastique amorphe et des microfibrilles individualisées de cellulose, le taux de microfibrilles rapporté à la matrice polymère étant de 15% ou moins, et même préférentiellement inférieur à 10%. On les obtient très simplement par mélange sous agitation des deux milieux aqueux, l'un, le latex contenant les billes de polymères et l'autre, la suspension aqueuse de microfibrilles de cellulose, dans les proportions voulues Leur principal intérêt est qu'ils sont un véhicule très commode pour la matière que constitue le résultat final de leur évaporation et qui est une composition polymère chargé de façon uniforme et régulière de microfibrilles individualisées de cellulose dont les propriétés mécaniques et thermomécaniques sont tout à fait remarquables et inattendues (dans la suite, ces matériaux seront décrits sous le nom de matériaux composites polymères / microfibrilles). Outre ce rôle de renfort de la matrice polymère, les microfibrilles apportent au latex renforcé lui-même une fonction épaississante très appréciable, dans les compositions aqueuses telles que peintures, encres, vernis, compositions pour colles aqueuses et revêtements de sols. Les latex de polymères avec lesquels on réalise les latex renforcés de l'invention sont constitués de particules de polymères thermoplastiques, de forme sphériques, en dispersion colloïdale dans l'eau. Pour certains besoins que peut satisfaire l'invention, par exemple la formulation de peintures, la formation d'un film par coalescence est avantageusement comprise entre -40°C et +90°C, mais d'autres usages peuvent faire appel à des thermoplastiques dont les Tg sont extérieures à ces limites. Ces polymères peuvent être de composition chimique très variable On s'est particulièrement intéressé ici au polyacrylate de butyle, au polystyrène et à leurs copolymères, mais il ne s'agit nullement là d'une limitation de l'invention qui peut être étendue sans difficulté à d'autres latex polymères, en particuliers aux latex vinyliques. Les latex correspondants s'obtiennent par les techniques de polymérisation en émulsion, bien connues de l'homme du métier; ils sont disponibles industriellement.

A partir de ces latex renforcés, on élabore aisément divers types de matériaux composites, qui sont également des objets de la présente invention, selon une opération qui dans son principe n'est autre que l'évaporation du latex, opération extraordinairement simple si on la compare à la méthode traditionnelle de dispersion de fibres dans une masse de polymère. Les matériaux composites polymères / microfibrilles, lorsque leur teneur en microfibrilles n'excède pas 2% et qu'ils sont examinés sous de faibles épaisseurs (environ 2 mm) ne présentent pas de différence d'aspect par rapport à la matrice polymère qui soit décelable à l'oeil nu ni même au microscope optique en lumière ordinaire. Il en est autrement de leurs propriétés mécaniques. Les microfibrilles, même en faible pourcentage, apportent un effet de renfort remarquable aussi bien aux faibles qu'aux fortes déformations et cet effet est de façon très inattendue, bien supérieur à celui que produisent d'autres types de structures cellulosiques (pâte de bois, cellulose microcristalline, etc.). En termes de physique des matériaux, on n'observe pas de modification sensible de la température de transition vitreuse, mais l'introduction des microfibrilles de cellulose se traduit par une augmentation du module relaxé en mécanique dynamique, une augmentation de la pente à l'origine, en particulier à haute température, et une augmentation de la contrainte équivalente au point d'inflexion en plasticité. Cette contrainte au seuil d'écoulement croît fortement avec le taux de microfibrilles. Elle passe par exemple de 80 MPa pour un film non renforcé à 120 MPa pour un film comportant 6% de microfibrilles de tunicine. Ce qui signifie en pratique que les objets ainsi réalisés peuvent encaisser des contraintes beaucoup plus importantes sans subir de déformations irréversibles. Les composites selon l'invention présentent en outre une meilleure stabilité à haute température (apparition sur les diagrammes de modules en fonction de la température de plateaux "caoutchoutiques" pouvant se maintenir jusqu'à 225-230°C). En pratique, le module caoutchoutique du polymère se trouve multiplié par 100 avec une charge de 6% de microfibrille. Ces modifications sont réellement extraordinaires, et tellement peu conformes à ce qui est connu de l'art antérieur que les modèles habituellement retenus pour le calcul des modules d'élasticité ou de cisaillement des composites (modèle Halpin-Kardos, Halpin J.C. et Kardos J.L., Moduli of Crystalline Polymers Employing Composite Theory, Journal Applied Physics, 43, 1972, 5, 2235-2241, ou modèle de Tsai-Halpin, cité par Boldizar, supra) ne sont plus utilisables pour les matériaux composites à microfibrilles selon l'invention (avec des microfibrilles de tunicine, il faudrait introduire dans le modèle des facteurs de forme d'une valeur 25 fois supérieure à la valeur expérimentale!). Dans la pratique de l'invention, les compositions correspondantes contiennent moins de 15% de microfibrilles au sens de l'invention, et préférentiellement moins de 10%.

On peut ainsi former des films épais ou des objets par simple évaporation, en coulant le latex renforcé dans un moule à revêtement anti-adhésif afin de permettre un décollage facile de ces composites qui présentent un fort pouvoir d'adhésion. La filmification se fait ensuite dans une étuve, préférablement à une température d'environ 30°C. L'évaporation doit se faire très lentement pour éviter un séchage intempestif en surface; pour cela l'humidité est maintenue proche de 100%, par exemple sous couvercle perforé et l'opération dure une quinzaine de jours.

On peut encore forme des objets en composites polymères / fibres cellulosiques par lyophilisation du "latex renforcé" correspondant, puis compression à chaud du produit lyophilisé. Ce procédé de mise en oeuvre donne des composites dont les propriétés mécaniques bien qu'inférieures à celles des "évaporés" sont remarquables pour les faibles taux de renfort sur lesquels on travaille. On peut également envisager d'extruder le produit lyophilisé préparé avec des taux de renfort plus élevés. Le procédé est particulièrement adapté à la réalisation de très petites structures, par exemple des connecteurs, dans lesquels la taille des microfibrilles de cellulose est sans conséquence sur l'homogénéité globale de la pièce. On préfère dans ce cas le renfort constitué de microfibrilles de tunicine pour leur facteur de forme et leur caractère cristallin.

On peut obtenir des poudres de matériau composite par *lyophilisation* du mélange latex-cellulose, selon les techniques connues de l'homme du métier. Les poudres ainsi obtenues sont plus ou moins compactes selon la température de transition vitreuse de la matrice polymère. Elles peuvent être utilisées telles quelles ou encore transformées en joncs par extrusion. Poudres et joncs peuvent être à leur tour utilisées pour la réalisation de plaques, de films ou d'objets par compression ou injection. On peut également en formuler des colles à chaud (hots-melts).

L'application la plus directe des "latex renforcés" est sans doute la formulation de peintures et produits du même type, à savoir encres, vernis, colles, compositions pour revêtements de sols, etc.

Elle offre divers avantages, à commencer par celui de pouvoir utiliser un latex de polymère à température de transition vitreuse inférieure à celles habituellement retenues. Par exemple, en prenant un latex avec une température de transition vitreuse de 0°C au lieu de 20°C (Tg habituelle des peintures), on facilite la filmification (coalescence des billes de latex) à température ambiante tout en maintenant de bonnes propriétés mécaniques et une stabilité thermique grâce à l'addition des microfibrilles de cellulose. Cette addition permet en outre de bénéficier d'un important accroissement de viscosité sans faire appel à des viscosants externes (ou du moins en en limitant les quantités) dont le maintien dans le film après évaporation est préjudiciable à ses propriétés et à sa bonne conservation. On observe en outre, ce qui est très apprécié, que les peintures formulées avec les latex renforcés de l'invention ont un temps de reprise sensiblement allongé, et que la peinture séchée a une bien meilleure résistance à l'abrasion.

### EXEMPLES

Les exemples qui suivent feront mieux comprendre l'invention.

### Exemple 1

L'exemple relate la préparation de microfibrilles porteuses de charges sulfates à partir de tunicine. Après avoir nettoyé de manière grossière les morceaux d'enveloppe de violets, ceux-ci sont mis dans 500 ml d'une solution aqueuse de potasse (KOH) à 5% pendant une nuit. Ils sont ensuite lavés et blanchis pendant 6 heures dans un bain à 80°C, en changeant celui-ci toutes les deux heures. Ce bain est composé de 300 ml d'une solution de chlorite (17 g de NaClO₂ dans 1 l d'eau distillée) mélangée à 300 ml d'une solution tampon acétate (27 g de NaOH ajouté à 75 ml de (CH₃COOH et complété jusqu'à 1 l avec de l'eau distillée). Ce traitement de blanchiment est répété 3 fois; il rend les morceaux de violets complètement blancs.

Les morceaux de cellulose sont ensuite désintégrés dans un mixer Waring Blender, pendant 20 minutes, la concentration en morceaux étant d'environ 5% dans l'eau distillée. On obtient ainsi une suspension aqueuse floculante de fragments de paroi, que l'on dilue à environ 1% et qu'on introduit en cycles successifs dans un homogénéiseur mécanique Gaulin 15M8TA. La pression de l'appareil est montée jusqu'à 60 MPa, par paliers pour éviter le blocage de l'appareil par les plus gros fragments de cellulose. On surveillera la montée en température qu'on veille à limiter à 70°C. Après une quinzaine de cycles, on obtient une suspension homogène contenant de petits agrégats de fibres. Un très simple test d'efficacité de l'opération consiste à observer la montée de l'épaississement du produit. A titre indicatif, le résultat souhaité est atteint lorsqu'une consistance de vaseline est obtenue avec des suspensions titrant environ 2% de cellulose.

La suspension issue de l'homogénéiseur est alors traitée par l'acide sulfurique, à raison de 300 ml d'acide sulfurique concentré (95%) pour 450 ml de la suspension sortant de l'homogénéiseur. On maintient le tout à 60°C pendant 20 minutes. La suspension est ensuite filtrée sur un verre fritté (porosité 1) pour éliminer les gros agrégats, après quoi les fibrilles cellulosiques sont retenues sur un filtre de porosité 4. On lave à l'eau distillée puis à la soude NaOH (0.1%) jusqu'à la neutralité de la suspension, puis de nouveau à l'eau distillée. La cellulose se dépose alors sur le filtre sous forme d'une pâte aqueuse de consistance visqueuse. On la redisperse dans l'eau, on homogénéise la suspension à l'aide d'un agitateur magnétique, puis on la passe sous ultrasons (Branson Sonifier B12) pendant environ 5 minutes. La suspension finale est prête à l'utilisation, bien homogène, non floculante et stable pendant plusieurs semaine.

### Exemple 1bis

L'exemple relate la préparation de microfibrilles porteuses de charges phosphates à partir de tunicine. On procède comme dans l'exemple 1 au blanchiment des tuniciers et le passage à l'homogénéiseur. 18 g de la suspension à 1% issue de l'homogénéiseur sont alors ajoutés dans le milieu de phosphorylation constitué de 50g d'urée dissoute à 50°C dans de l'acide orthophosphorique à 85%. Le mélange est alors chauffé à 140°C au bain d'huile pendant 15-25 minutes. Le protocole de nettoyage, récupération en dispersion des microfibrilles est le même que celui de l'exemple 1.

Ce mode de préparation "phosphorique" est préféré au mode "sulfurique" de l'exemple 1 pour les microfibrilles autres que celles de tunicine et qui n'ont pas une aussi bonne résistance à l'hydrolyse acide.

### Exemple 2 : Préparation de latex renforcé.

On a préparé des latex renforcés à divers taux de microfibrilles à partir de suspensions de microfibrilles de tunicine à 0,68% d'extrait sec et d'un latex à environ 50% d'extrait sec formé par polymérisation en émulsion de 34% de styrène, 64% d'acrylate de butyle, 1% d'acrylamide et 1% d'acide acrylique l'amorceur utilisé étant le persulfate de potassium ; le polymère correspondant présente une température de transition vitreuse Tg de +0°C. Les latex renforcés correspondants résultent de leur mélange soigneux avec des suspensions de microfibrilles de cellulose dans des proportions telles que le pourcentage du renfort dans le copolymère se situe aux valeurs visées. Par exemple, on forme des systèmes dont la matière sèche comportera approximativement 6% de microfibrilles en mélangeant soigneusement 18,5 parties du latex et 81,5 parties de la suspension de microfibrilles.

### Exemple 3 : modules élastiques des composites

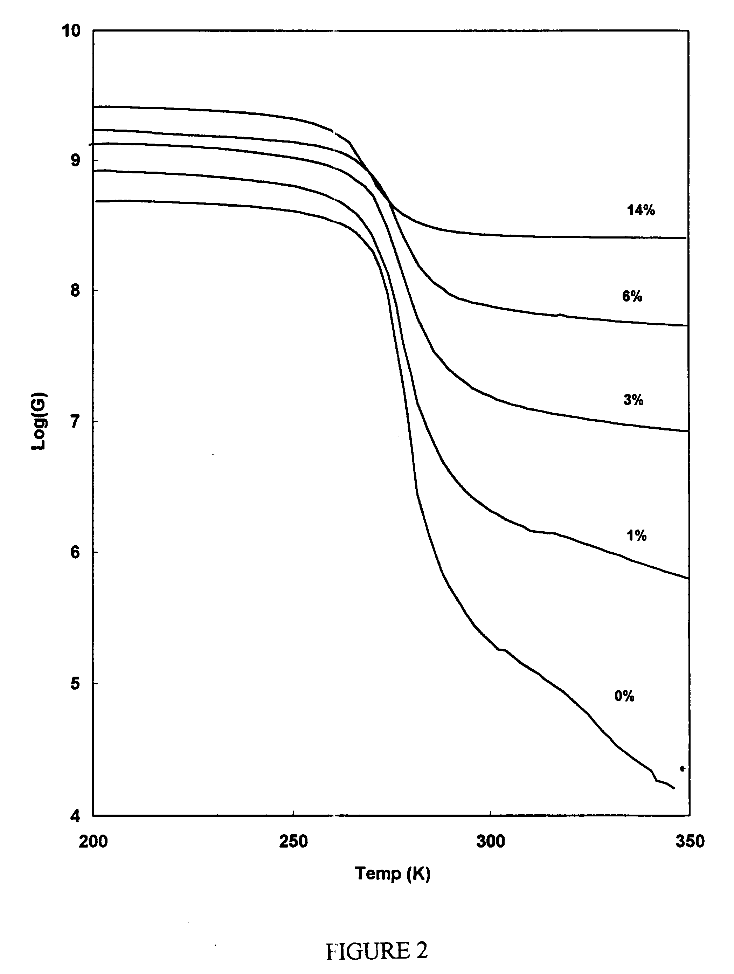

On a formé, à partir du latex de l'exemple précédent renforcé par respectivement 6%, 3%, 1% et 0% de microfibrilles de tunicine et selon la technique des films épais par évaporation décrite plus haut, de petits parallélépipèdes (longueur 15-20 mm, largeur 6-7 mm, épaisseur 0,5-2 mm) que l'on a soumis à une analyse dynamique au pendule de torsion (mécanalyseur Metravib Instruments), dans une gamme de températures allant de 200 à 350°K (on renvoie pour un exposé plus détaillé sur le comportement viscoélastique du copolymère Sty-ABu, Cavaillé J.-Y., Vassoillia R., Thollet G., Rios L. et Pichot C., Structural Morphology of Polystyrène-Polybutyl Acrylate Polymer - Polymer Composites Studied by Dynamic Mechanical Properties, Colloid & Polymer Science, 269 (1991), 248-258, et pour la technologie du mécanalyseur Metravib à Cavaillé J.-Y. et all., Un Nouvel Outil d'Analyse de Spectrométrie Mécanique : le Micromécanalyseur, Spectra 2000, 16 N°113, 1988, 37-45). Elle permet d'obtenir des courbes des modules caractéristiques du composite en fonction de la température, en particulier son module réel de cisaillement G' qui est associé à l'énergie élastique emmagasinée dans le matériau lors de la déformation, le module imaginaire G" qui est associé au caractère visqueux et donc à l'énergie dissipée lors de l'essai, et la grandeur tang(φ) = G"/G', tangente de l'angle de perte, est le coefficient de frottement intérieur caractérisant l'aptitude du matériau à dissiper de l'énergie lorsqu'il est soumis à une contrainte cyclique. La figure 2 représente l'évolution du module réel de cisaillement G' en fonction de la température. Le comportement dynamique des échantillons composites testés est typique de celui d'un polymère, avec une chute du module de cisaillement lors de la transition vitreuse, encadrée par deux paliers, l'un situé aux basses températures (T<Tg) correspondant au domaine vitreux et l'autre situé aux hautes températures (T>Tg) correspondant au domaine caoutchoutique. On remarque que la température de transition Tg n'est pratiquement pas affectée par la change de microfibrilles. Aux températures supérieures à Tg, l'effet de renfort est remarquable, si on en juge par comparaison avec le module du polymère seul qui chute jusqu'à 10⁵ Pa. Le module relaxé du film à 6% de microfibrilles de tunicine est plus de 100 fois supérieur au module relaxé de la matrice pure. De plus, ce module reste parfaitement constant jusqu'à 500°K, température à laquelle la cellulose commence à se dégrader. Contrairement au cas de la matrice pure, les chaînes polymères ne fluent pas avec la température. La stabilité thermique du matériau est ainsi améliorée.

### Exemple 4

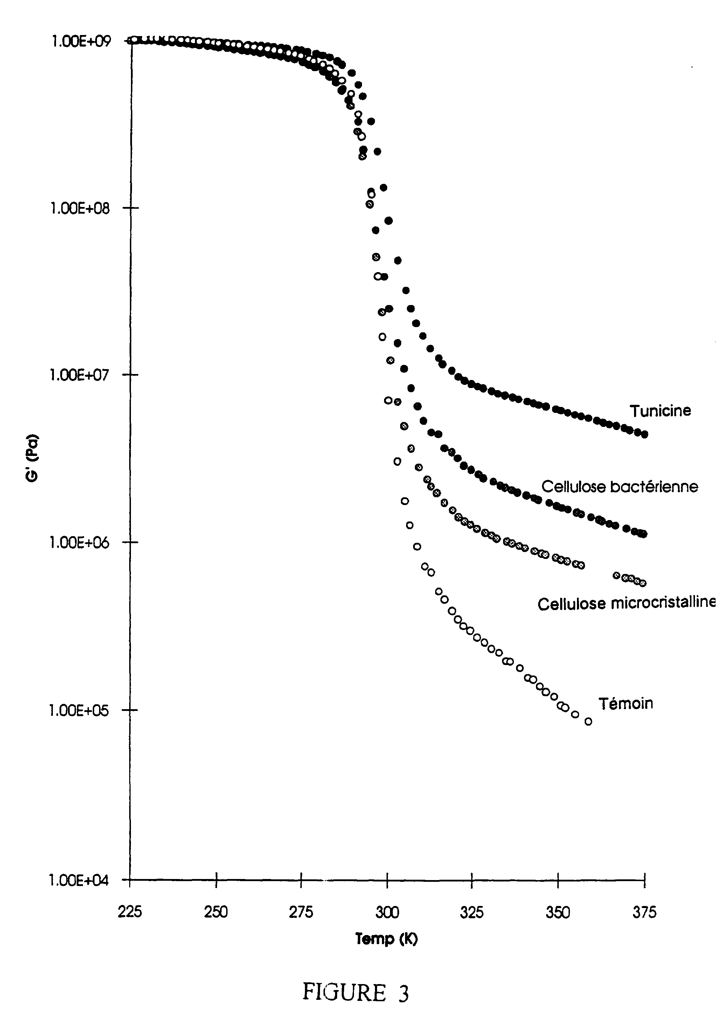

On a soumis à l'analyse dynamique selon le processus décrit à l'exemple 3 précédent, des éprouvettes de même géométrie mais réalisées selon la technique des poudres pressées avec des latex qui diffèrent de ceux de l'exemple 2 en ce que qu'il sont formés par polymérisation en émulsion de 49% de styrène, 49% d'acrylate de butyle, 1% d'acrylamide et 1% d'acide acrylique, et dont la température de transition vitreuse Tg est de +20°C. Les courbes de la figure 3 permettent de comparer le renforcement obtenu par différents types de renforts cellulosiques. Les composites testés contiennent tous 6% de renfort : microfibrilles de tunicine, microfibrilles de cellulose bactérienne préparée au laboratoire, cellulose microcristalline de bois (ces deux dernières ont été obtenues par application de traitement de l'exemple 1, mais appliqué respectivement à une cellulose bactérienne et une cellulose microcristalline du commerce) . On constate sur de diagramme le considérable pouvoir de renforcement des microfibrilles de tunicine, comparé à celui beaucoup plus modeste des fibrilles de cellulose de bois que l'on attribue à leur association en agrégats non individualisés et à leur très bas facteur de forme, ou à celui des fibrilles de cellulose bactérienne, longues, mais dénuées de rigidité.

### Exemple 5 : viscosité des latex renforcés

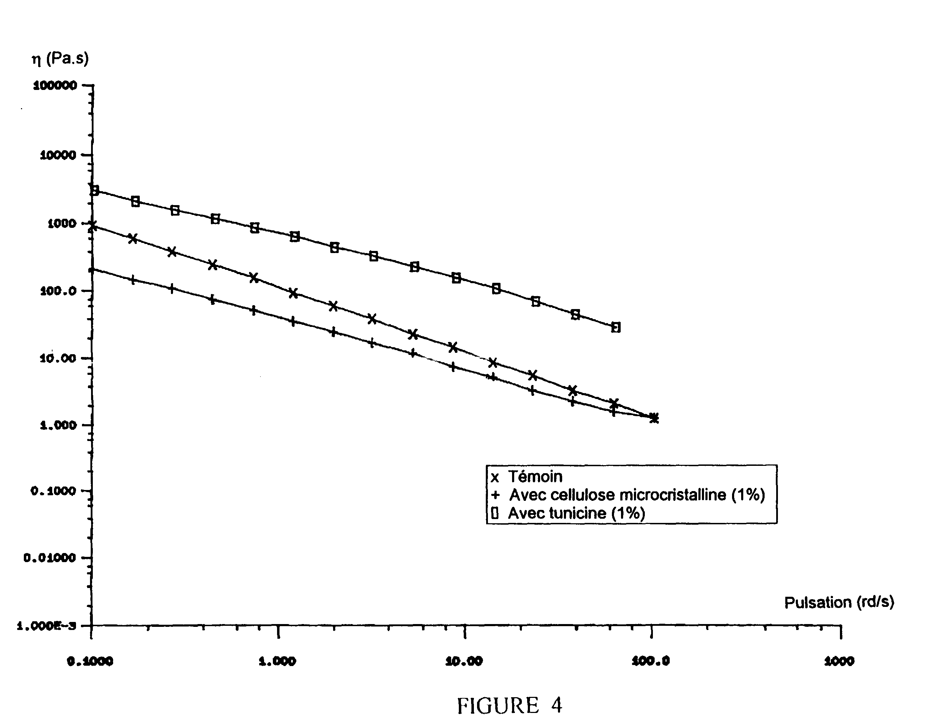

On a mesuré la viscosité de latex avec un rhéomètre plancône à contrainte imposée, Carri-Med CSL 100 fonctionnant en régime dynamique. La figure 4 rapporte les résultats sur un graphique viscosité en Pa.s en fonction de la pulsation en radians/seconde. Le témoin est le latex acrylique de l'exemple 4, qu'on compare au même latex additionné d'une part de 1% d'une cellulose microcristalline, et d'autre part de 1% de microfibrilles de tunicine selon l'invention telles qu'obtenues dans l'exemple 1.

## Revendications

1. Composition comportant une matrice polymère thermoplastique et une charge cellulosique, caractérisée en ce que la charge cellulosique comporte des microfibrilles individualisées de cellulose, dont la longueur moyenne est supérieure au micromètre, le diamètre est compris entre 2 et 30 nanomètres, le facteur de forme est supérieur à 60, et dont le taux de cristallinité est supérieur à 20%.

2. Composition selon la revendication 1 caractérisée en ce qu'elle contient moins de 15% de microfibrilles.

3. Composition selon les revendications 1 ou 2, caractérisée en ce que les microfibrilles sont des microfibrilles de tunicine.

4. Composition selon les revendications 1 ou 2, caractérisée en ce que les microfibrilles sont des microfibrilles d'algues à parois cellulosiques.

5. Composition selon les revendications 1 ou 2, caractérisée en ce que les microfibrilles sont des microfibrilles de parenchyme.

6. Composition aqueuse comportant un latex polymère et une charge cellulosique caractérisée en ce que la charge cellulosique est constitutée des microfibrilles telles que décrites dans les revendications 1 à 5, en suspension stable et individualisées dans la composition.

7. Composition aqueuse selon la revendication 6, caractérisée en ce que le latex polymère est un latex de polymère thermoplastique présentant une température de transition vitreuse comprise entre -40°C et +90°C.

8. Composition aqueuse selon les revendications 6 à 7, caractérisée en ce que les microfibrilles sont stabilisées par la présence de charges superficielles.

9. Composition aqueuse selon la revendication 8, caractérisée en ce que les microfibrilles portent des charges superficielles constituées par des ions sulfates.

10. Composition aqueuse selon la revendication 8, caractérisée en ce que Les microfibrilles portent des charges superficielles constituées par des ions phosphates.

11. Compositions selon l'une ou l'autre des revendications 6 à 10, caractérisées en ce que les microfibrilles sont des microfibrilles de tunicine.

12. Compositions selon l'une ou l'autre des revendications 6 à 10, caractérisées en ce que les microfibrilles sont des microfibrilles d'algues à parois cellulosiques.

13. Compositions selon l'une ou l'autre des revendications 6 à 10, caractérisées en ce que les microfibrilles sont des microfibrilles de parenchyme.

14. Films de la composition selon les revendications 1 à 5, caractérisés en ce qu'on les obtient par évaporation d'une composition aqueuse stable de latex de polymère et de suspension aqueuse de microfibrilles de cellulose.

15. Poudres de la composition selon les revendications 1 à 5, caractérisées en ce qu'on l'obtient par lyophilisation d'une composition aqueuse stable de latex de polymère et de suspension aqueuse de microfibrilles de cellulose.

16. Joncs de la composition selon les revendications 1 à 5, caractérisés en ce qu'on les obtient par extrusion d'une poudre de la revendication 15.

17. Plaques de la composition selon les revendications 1 à 5, caractérisées en ce qu'on les obtient par pressage de la poudre de la revendication 15 ou des joncs de la revendication 16.

18. Application des compositions aqueuses selon les revendications 6 à 13 à la formulation des peintures, encres et vernis.

19. Application des compositions aqueuses selon les revendications 6 à 13 à la formulation des colles aqueuses et des compositions pour revêtements de sols.

20. Fabrication d'objets de la composition selon les revendications 1 à 5 par évaporation directe ou lyophilisation d'une composition aqueuse stable de latex de polymère et de suspension aqueuse de microfibrilles de cellulose.

21. Fabrication d'objet par pressage ou injection respectivement de poudres ou de joncs selon les revendications 15 ou 16.

22. Application respectivement de poudres ou de joncs selon les revendications 15 ou 16 à la préparation de colles à chaud (hot-melts).

## Patentansprüche

1. Zusammensetzung, enthaltend eine thermoplastische Polymermatrix und einen Füllstoff aus Cellulose, dadurch gekennzeichnet, daß der cellulosehaltige Füllstoff einzelne Mikrofibrillen enthält, deren mittlere Länge oberhalb eines Mikrometers liegt, deren Durchmesser zwischen 2 und 30 Nanometern liegt, deren Formfaktor größer als 60 ist und deren Kristallinitätsgrad mehr als 20 % beträgt.

2. Zusammensetzung nach Anspruch 1, dadurch gekennzeichnet, daß sie mindestens 15 % Mikrofibrillen (Mikrofäserchen) enthält.

3. Zusammensetzung nach Anspruch 1 oder 2, dadurch gekennzeichnet, daß die Mikrofibrillen Tunicinmikrofibrillen sind.

4. Zusammensetzung nach Anspruch 1 oder 2, dadurch gekennzeichnet, daß die Mikrofibrillen Mikrofibrillen von Algen mit cellulosehaltigen Wandungen sind.

5. Zusammensetzung nach Anspruch 1 oder 2, dadurch gekennzeichnet, daß die Mikrofibrillen Parenchymmikrofibrillen sind.

6. Wäßrige Zusammensetzung, enthaltend einen Polymerlatex und einen Füllstoff aus Cellulose, dadurch gekennzeichnet, daß der cellulosehaltige Füllstoff aus Mikrofibrillen, wie in den Ansprüchen 1 bis 5 beschrieben, in stabiler Suspension und in der Zusammensetzung einzeln vorliegend, besteht.

7. Wäßrige Zusammensetzung nach Anspruch 6, dadurch gekennzeichnet, daß der Polymerlatex der Latex eines thermoplastischen Polymers mit einer Glasübergangstemperatur zwischen -40°C und +90 °C ist.

8. Wäßrige Zusammensetzung nach Anspruch 6 oder 7, dadurch gekennzeichnet, daß die Mikrofibrillen durch die Gegenwart von Oberflächenladungen stabilisiert sind.

9. wäßrige Zusammensetzung nach Anspruch 8, dadurch gekennzeichnet, daß die Mikrofibrillen Oberflächenladungen tragen, die aus Sulfationen bestehen.

10. Wäßrige Zusammensetzung nach Anspruch 8, dadurch gekennzeichnet, daß die Mikrofibrillen Oberflächenladungen tragen, die aus Phosphationen bestehen.

11. Wäßrige Zusammensetzung nach einem der Ansprüche 6 bis 10, dadurch gekennzeichnet, daß die Mikrofibrillen Mikrofibrillen aus Tunicin sind.

12. Wäßrige Zusammensetzung nach einem der Ansprüche 6 bis 10, dadurch gekennzeichnet, daß die Mikrofibrillen Mikrofibrillen von Algen mit Wandungen aus Cellulose sind.

13. Wäßrige Zusammensetzung nacl- einem der Ansprüche 6 bis 10, dadurch gekennzeichnet, daß die Mikrofibrillen Parenchymmikrofibrillen sind.

14. Dünne Schichten (Filme) aus einer Zusammensetzung nach den Ansprüchen 1 bis 5, dadurch gekennzeichnet, daß man sie durch Eindampfen einer stabilen wäßrigen Zusammensetzung eines Polymerlatex und einer wäßrigen Suspension von Cellulosemikrofibrillen erhält.

15. Pulver aus einer Zusammensetzung nach den Ansprüchen 1 bis 5, dadurch gekennzeichnet, daß man sie durch Gefriertrocknung (Lyophilisation) einer stabilen wäßrigen Zusammensetzung eines Polymerlatex und einer wäßrigen Suspension von Cellulosemikrofibrillen erhält.

16. Stränge aus einer Zusammensetzung nach den Ansprüchen 1 bis 5, dadurch gekennzeichnet, daß man sie durch Extrusion eines Pulvers nach Anspruch 15 erhält.

17. Platten und Tafeln aus einer Zusammensetzung nach den Ansprüchen 1 bis 5, dadurch gekennzeichnet, daß nan sie durch Verpressen des Pulvers nach Anspruch 15 oder der Stränge nach Anspruch 16 erhält.

18. Verwendung von wäßrigen Zusammensetzungen nach den Ansprüchen 6 bis 13 für die Rezeptur von Anstrichfarben, Druckfarben und Lacken.

19. Verwendung von wäßrigen Zusammensetzungen nach den Ansprüchen 6 bis 13 für die Rezeptur von wäßrigen Klebstoffen und von Zusammensetzungen zum Beschichten von Böden.

20. Herstellung von Gegenständen aus einer Zusammensetzung nach den Ansprüchen 1 bis 5 mittels direktem Eindampfen oder Gefriertrocknung einer stabilen wäßrigen Zusammensetzung aus einem Polymerlatex und einer wäßrigen Suspension von Cellulosemikrofibrillen.

21. Herstellung eines Gegenstandes durch Verpressen bzw. Einspritzen von Pulvern oder Strängen nach den Ansprüchen 15 oder 16.

22. Verwendung von Pulvern oder Strängen nach den Ansprüchen 15 bzw. 16 zur Herstellung von Heißschmelzklebern (hot-melts).

## Claims

1. Composition comprising a thermoplastic polymer matrix and a cellulose filler, characterised in that the cellulose filler comprises individualized cellulose microfibrils the mean length of which is greater than a micrometre, the diameter is between 2 and 30 nanometres, the aspect ratio is higher than 60, and the degree of crystallinity of which is higher than 20 %.

2. Composition according to Claim 1, characterized in that it contains less than 15 % of microfibrils.

3. Composition according to Claim 1 or 2, characterized in that the microfibrils are tunicin microfibrils.

4. Composition according to Claim 1 or 2, characterized in that the microfibrils are microfibrils of algae with cellulose walls.

5. Composition according to Claim 1 or 2, characterized in that the microfibrils are parenchyma microfibrils.

6. Aqueous composition comprising a polymer latex and a cellulose filler, characterized in that the cellulose filler consists of microfibrils as described in Claims 1 to 5, in stable suspension and individualized in the composition.

7. Aqueous composition according to Claim 6, characterized in that the polymer latex is a latex of thermoplactic polymer exhibiting a glass transition temperature of between -40°C and 90°C.

8. Aqueous composition according to Claim 6 to 7, characterized in that the microfibrils are stabilized by the presence of surface charges.

9. Aqueous composition according to Claim 8, characterized in that the microfibrils carry surface charges consisting of sulphate ions.

10. Aqueous composition according to Claim 8, characterized in that the microfibrils carry surface charges consisting of phosphate ions.

11. Composition according to any one of Claims 6 to 10, characterized in that the microfibrils are tunicin microfibrils.

12. Compositions according to any one of Claims 6 to 10, characterized in that the microfibrils are microfibrils of algae with cellulose walls.

13. Compositions according to any one of Claims 6 to 10, characterized in that the microfibrils are parenchyma microfibrils.

14. Films of the composition according to Claims 1 to 5, characterized in that they are obtained by evaporation of a stable aqueous composition of polymer latex and of aqueous suspension of cellulose microfibrils.

15. Powders of the composition according to Claims 1 to 5, characterized in that they are obtained by freeze-drying of a stable aqueous composition of polymer latex and of aqueous suspension of cellulose microfibrils.

16. Reeds of the composition according to Claim 1 to 5, characterized in that they are obtained by extrusion of a powder of Claim 15.

17. Sheets of the composition according to Claims 1 to 5, characterized in that they are obtained by pressing the powder of Claim 15 or the reeds of Claim 16.

18. Application of the aqueous compositions according to Claims 6 to 13 to the formulation of paints, inks and varnishes.

19. Application of the aqueous compositions according to Claims 6 to 13 to the formulation of aqueous adhesives and of compositions for floor coverings.

20. Manufacture of objects from the composition according to Claims 1 to 5 by direct evaporation or freeze-drying of a stable aqueous composition of polymer latex and of aqueous suspension of cellulose microfibrils.

21. Manufacture of an object by pressing or injection-moulding, respectively, powders or reeds according to Claim 15 or 16.

22. Application, respectively, of powders or reeds according to Claim 15 or 16 to the preparation of hotmelt adhesives.
